(19) Europäisches Patentamt
European Patent Office
Office européen des brevets

(11) **EP 4 741 914 A1**

(12) **EUROPEAN PATENT APPLICATION**

(43) Date of publication:
**13.05.2026 Bulletin 2026/20**

(21) Application number: **24212097.0**

(22) Date of filing: **11.11.2024**

(51) International Patent Classification (IPC):
**G02F 1/01** (2006.01)   **G02F 1/025** (2006.01)
**G02F 1/21** (2006.01)   **G02F 1/313** (2006.01)

(52) Cooperative Patent Classification (CPC):
**G02F 1/0147; G02F 1/0121; G02F 1/025;
G02F 1/212; G02F 1/3136**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Stichting IMEC Nederland
5656 AE Eindhoven (NL)**

(72) Inventor: **ROMME, Jac
3118 JP Schiedam (NL)**

(74) Representative: **AWA Sweden AB
Matrosgatan 1
Box 5117
200 71 Malmö (SE)**

(54) **A DEVICE AND A METHOD FOR CONTROLLING A THERMO-OPTICAL PHASE SHIFTER**

(57) A device (100) for controlling a thermo-optical phase shifter, TOPS, (202; 302) is provided, said device (100) comprising: a driving circuit (110) providing power to the TOPS (202; 302) by toggling between an on state outputting maximum power and an off state outputting minimum power, wherein a toggling scheme controls an effective power; and a controller (120) generating a modulation signal for controlling the toggling scheme and comprising a pre-distortion module (122) for determining an initial portion of the modulation signal for bringing the temperature of the TOPS (202; 302) from a first level corresponding to a first effective power of the driving circuit (110) to a second level corresponding to a second effective power of the driving circuit (110), wherein the pre-distortion module (122) determines the initial portion based on a non-linear function of the first effective power, the second effective power, and the maximum or minimum power.

Fig. 3

**Description**

Technical field

The present description relates to controlling of a thermo-optical phase shifter. The present description also relates to an optical switch and an optical device comprising one or more thermo-optical phase shifters being accurately controlled.

Background

Optical phase shifters are used in many applications. The optical phase shifter may control phase of a light signal, which may for instance be used for controlling a direction of the light signal, such as in an optical switching network, or for controlling beam steering, such as in an optical phased array (OPA).

Several alternatives with different advantages exist for implementing an optical phase shifter. For instance, a thermo-optical phase shifter (TOPS) may be used, wherein the TOPS uses a heater for heating a waveguide. By controlling the temperature of the waveguide, a refractive index of the waveguide is slightly changed, which in turn implies that a phase shift of a light signal propagating through a length of the waveguide will be affected.

The TOPS is an attractive solution in applications where low loss in the light signals is needed. However, the TOPS may require relatively high-power consumption for heating the heater and also in driving electronics for providing a control signal to the heater. For instance, driving electronics may use an amplifier that may be controlled to provide a necessary power output to the heater for controlling the temperature of the waveguide. However, there may be losses in the amplifier such that the control of the TOPS is not power efficient. In addition, heat dissipated in the driving electronics may affect the phase shift provided by the TOPSs making accurate control of the temperature of the waveguide more difficult.

Further, the TOPS provides a fairly slow response such that changing the TOPS from providing a first phase shift at a first level to a second phase shift at a second level may require a time in order of a few or even hundreds of microseconds. In addition, if a fast response is desired, a higher power consumption may be needed.

Thus, there is a need of providing an improved control of a TOPS for providing low power consumption and fast changes to the phase shift provided by the TOPS.

Summary

An objective of the present description is to provide controlling of a thermo-optical phase shifter in a power efficient and fast manner.

This and other objectives are at least partly met by the invention as defined in the independent claims. Preferred embodiments are set out in the dependent claims.

According to a first aspect, there is provided a device for controlling a thermo-optical phase shifter (TOPS) for affecting an optical waveguide based on temperature of the TOPS, said device comprising: a driving circuit configured to provide power to the TOPS, wherein the driving circuit is configured to toggle between an on state for outputting a maximum power and an off state for outputting a minimum power, wherein a toggling scheme of the driving circuit controls an effective power output by the driving circuit, and wherein the effective power output by the driving circuit corresponds to a temperature of the TOPS; and a controller configured to generate a modulation signal and provide the modulation signal to the driving circuit for controlling the toggling scheme of the driving circuit, wherein the controller comprises a pre-distortion module for determining an initial portion of the modulation signal for bringing the temperature of the TOPS from a first level corresponding to a first effective power of the driving circuit to a second level corresponding to a second effective power of the driving circuit, wherein, in case the second effective power is larger than the first effective power, the pre-distortion module is configured to determine the initial portion of the modulation signal based on a non-linear function of the first effective power, the second effective power, and the maximum power of the driving circuit, and in case the second effective power is smaller than the first effective power, the pre-distortion module is configured to determine the initial portion of the modulation signal based on a non-linear function of the first effective power, the second effective power, and the minimum power of the driving circuit.

The driving circuit is configured to toggle between an off state and an on state. This implies that the driving circuit may be controlled based only on a switch for toggling between the on state and the off state. The effective power output by the driving circuit may thus be dependent on a percentage of time that the driving circuit is in the on state compared to the driving circuit being in the off state, which may also be referred to as a duty cycle of the driving circuit. Hence, the effective power output by the driving circuit may be controlled between the minimum power and the maximum power based on the duty cycle used. The duty cycle is a short-term duty cycle during which an average power (over at least one period of an on state and an off state) output by the driving circuit is held constant. The short-term duty cycle may have a duration in order of a time constant of a response of the TOPS.

A switch for toggling between the on state and the off state may be very power efficient, i.e., the switch may be associated with very low losses. This implies that driving circuit may provide a power efficient manner for controlling the thermo-optical phase shifter.

The toggling of the driving circuit between an on state and an off state provide high frequency components in driving of the TOPS. However, it is further realized that a thermal response from the TOPS may be slow in relation to fast toggling of the driving circuit such that the TOPS functions as a low-pass filter. This implies that the toggling of the driving circuit may not cause a ripple or may cause an insignificant ripple in the output of the TOPS.

The controller is configured to generate a modulation signal that may control the toggling of the driving circuit between the on state and the off state. The modulation signal may thus be configured to control the effective power output by the driving circuit, e.g., by controlling the duty cycle of the driving circuit.

The controller comprises a pre-distortion module configured to determine an initial portion of the modulation signal. The initial portion corresponds to a portion of the modulation signal at a start of the signal when the temperature of the TOPS is to be changed. Thanks to the initial portion being separately determined, the controller may be able to quickly bring the temperature of the TOPS from the first level to the second level. A purpose of the initial portion may thus be to quickly bring the temperature of the TOPS from the first level to the second level, whereas the modulation signal may, after end of the initial portion, provide a steady-state portion of the modulation signal, which may correspond to a signal with a constant duty cycle for maintaining the temperature of the TOPS constant at the second level.

The pre-distortion module is configured to determine the initial portion using a non-linear function of the first effective power, the second effective power and maximum and/or minimum power of the driving circuit. Thus, it is a realization of the first aspect, that the initial portion should be determined using several parameters, including the first effective power, the second effective power and the power output by the driving circuit. Thanks to using all these parameters, the pre-distortion module is able to determine the initial portion in such manner as to ensure that the temperature of the TOPS is quickly brought to the second level. The initial portion may be determined in such manner that the TOPS is at or very close to the second level at end of the initial portion.

Purely as an example, considering an increase of the temperature of the TOPS to a second level higher than the first level, the TOPS being very close to the second level may correspond to the TOPS being brought to at least 90%, such as at least 95% of the second level at the end of the initial portion.

The TOPS may be any component that provides a phase shift of a light signal based on a thermal control. The light signal is propagated by the optical waveguide. Thus, the TOPS may be configured to provide a thermal control element that provides heating and/or cooling of the optical waveguide, directly or indirectly, for controlling propagation of the light signal in the optical waveguide.

A refractive index of the optical waveguide may be dependent on the temperature of the optical waveguide. The TOPS may thus for instance be configured to control the refractive index of the optical waveguide based on the thermal control. The refractive index of the optical waveguide may also affect a path length through a portion of the optical waveguide affected by the TOPS, which causes a phase shift of a light signal traveling through the portion of the optical waveguide to be changed. In this manner, the TOPS may provide a control of a phase shift of the light signal propagating through the optical waveguide.

It should be realized that the phase shift provided by the TOPS may be used for many different purposes. For instance, the TOPS may be used for controlling a phase shift in a waveguide arm in relation to a phase shift in another waveguide arm for controlling how two light signals in the waveguide arms are combined. This may for instance be used for interferometry or for optical switching. Also or alternatively, the phase shift provided by the TOPS may control a resonance wavelength of the optical waveguide, which may for instance be used for controlling whether or not a light signal may be coupled into the optical waveguide.

It should be realized that the term "*phase shift*" may refer to a difference in phase between a light signal traveling through the optical waveguide affected by the TOPS and another light signal traveling through another optical waveguide or through any other path. However, the term "*phase shift*" may also refer to a difference in phase between a light signal traveling through the optical waveguide when the TOPS is inactive and the light signal traveling through the optical waveguide when the TOPS is active.

It should be realized that the term light signal should be understood broadly as being directed to a signal of electro-magnetic radiation. Thus, the light signal is not limited to electro-magnetic radiation in a visible range but may for instance relate to ultraviolet light or infrared light, such as a range of near-infrared light or short-wave infrared light.

The driving circuit may be implemented as any electronic circuitry which may provide an output signal to the TOPS. The driving circuit may thus receive an analog or digital control signal and may output an analog electrical signal, such as a current or voltage signal, in response to the received control signal. The electrical signal output by the driving circuit may cause the temperature of the TOPS to be changed, for instance by the electrical signal causing a thermal response by a thermal control element, such as a heater, of the TOPS.

The driving circuit may comprise a switch, which may be configured to toggle between two positions, in dependence of the control signal. Thus, the switch may be configured to assume a first position or a second position, respectively, in dependence of a level of the control signal. This implies that the driving circuit may be conveniently controlled using a digital signal.

The driving circuit being configured to toggle between an on state and an off state implies that the driving circuit is configured to switch multiple times between the on state and the off state. The toggling scheme may be configured to define how often the driving circuit should switch from the on state to the off state, and vice versa, and/or a duration of periods that the driving circuit is to be held in the on state and the off state, respectively. Thus, the toggling scheme may control an effective power being output by the driving circuit based on an average of the power output during periods of the driving circuit being in the on state and the off state, respectively.

The term "*effective power*" should be understood as meaning an average power output by the driving circuit based on the toggling scheme providing a switching between the on state and the off state. Thus, the effective power may correspond to a constant power level that is equal to the power output during at least one period of on state and off state of the driving circuit.

It should be realized that the driving circuit may be configured to output zero power in the off state. Thus, the minimum power may be a zero power. However, it should be realized that the term "*off state*" should not be understood as the driving circuit necessarily being completely turned off and/or that the driving circuit provides zero power in the off state. The terms "*on state*" and "*off state*" should rather be understood as indicating a state in which a relatively high power of the driving circuit is output and a state in which a relatively low power of the driving circuit is output, respectively. In other words, the driving circuit may be configured to toggle between a first state for outputting a first, pre-set power level and a second state for outputting a second, pre-set power level.

Thus, the driving circuit may be configured to output some power in the off state, such that the minimum power need not necessarily be zero power.

It should further be understood that the effective power output by the driving circuit is converted by the TOPS to a temperature of the TOPS. Thus, there may be a unique association between the effective power output by the driving circuit and the temperature of the TOPS such that the effective power output by the driving circuit will cause the TOPS to assume a corresponding temperature according to the unique association.

However, it should further be realized that the TOPS may not immediately assume the corresponding temperature upon receiving the effective power. Rather, the effective power output by the driving circuit is uniquely associated with a corresponding temperature of the TOPS, in a steady-state of the TOPS after the TOPS has gone through a settling time for settling at the corresponding temperature. Further, it should be realized that the settling time may be relatively short thanks to the use of the initial portion of the modulation signal, as explained above.

It should further be realized that the temperature of the TOPS is also associated with a received effective power from the driving circuit. Thus, the temperature of the TOPS corresponds to an effective power of the driving circuit in an inverse manner to how the effective power of the driving circuit corresponds to the temperature of the TOPS.

In addition, the temperature of the TOPS may cause a particular phase shift of the light signal propagating in the optical waveguide. A relation between the effective power and the temperature of the TOPS may not necessarily be a linear relation. However, using a mapping of desired phase shift to target effective power provided by the driving circuit, any relation between the effective power and the phase shift may be taken into account when determining the target effective power for providing the desired phase shift.

It should further be realized that a change in phase shift of $2\pi$ (360°) may have no effective difference on a function of the optical waveguide. Nevertheless, different levels of the temperature of the TOPS are associated with the phase shifts that differ by $2\pi$ (360°).

The power output by the driving circuit may be related to different characteristics of a system for controlling the phase shift in the optical waveguide. Thus, the pre-distortion module may not necessarily use actual power values of the first effective power, the second effective power and the maximum or minimum power of the driving circuit in calculations for determining the initial portion of the modulation signal. Rather, the pre-distortion module being configured to determine the initial portion based on a non-linear function of the first effective power, the second effective power, and the maximum or minimum power of the driving circuit should be understood as including replacing power values for a different characteristic while maintaining the same non-linear functional relationship. For instance, the determination may instead be performed by using temperatures of the TOPS or phase shifts in calculations performed by the pre-distortion module.

The controller may be configured to generate the modulation signal in digital domain. The modulation signal may be provided to the driving circuit as a digital control signal. This implies that the controller may at least be partially implemented as a processing unit, such as a general-purpose processing unit, e.g., a central processing unit (CPU), which may execute instructions of one or more computer programs in order to implement functionality of the controller. The controller may also or alternatively be implemented as firmware arranged e.g., in an embedded system, or as a specifically designed processing unit, such as an Application-Specific Integrated Circuit (ASIC) or a Field-Programmable Gate Array (FPGA). It should be realized that the controller may be implemented as a combination of hardware and software components.

The pre-distortion module may be a hardware and/or software component within the controller. The pre-distortion module is configured to determine the initial portion of the modulation signal. The initial portion may be seen as a distortion of the modulation signal provided before the steady-state portion of the modulation signal in that the signal in the initial portion differs from the signal in the steady-state portion.

The determining of the initial portion of the modulation signal may imply that a signal level and a duration of the initial portion is determined. The initial portion of the modulation signal may for instance be determined as a digital signal, wherein the signal level of the modulation signal during the initial period may be set to be 0 or 1, in dependence of whether the temperature of the TOPS is to be decreased or increased, respectively. Further, the determining of the initial portion may further comprise determining the duration during which the signal level of the modulation signal is to be held at 0 or 1, respectively.

It should be realized that the signal level of the modulation signal need not necessarily be constant during the entire initial period. Rather, the modulation signal may be set to provide a duty cycle that is different than 0 or 100%. This may be achieved by providing a control input to a digital modulator setting a duty cycle to be used during the initial portion, wherein the control input controls the duty cycle to be between 0 and 100%.

The duty cycle set may be selected in relation to a required settling time of the TOPS. For instance, if a time constraint for the settling time is met, the signal level of the modulation signal need not be constant during the entire initial period.

The device controlling the TOPS may be integrated on a common substrate with the TOPS. This implies that the controlling of the TOPS may be provided close to the TOPS facilitating real-time and fast controlling. However, it should be realized that the device for controlling the TOPS may be a separate controlling device which may be separately manufactured and/or arranged in a separate physical entity from the TOPS.

According to an embodiment, the pre-distortion module is configured to determine the initial portion as an initial duration period, wherein the pre-distortion module is configured to determine the initial duration period in relation to a period of a clock cycle for controlling the driving circuit.

Thus, the pre-distortion module may be configured to relate a duration of the signal level of the modulation signal in relation to the clock cycle. The clock cycle may be used in the controller for controlling function of the controller.

Thanks to taking the clock cycle into account, the pre-distortion module may determine the duration of the initial period in relation to a time resolution available by the controller. This ensures that the duration is determined properly in relation to an actual output of the modulation signal being provided by the controller, as controlled by the clock signal.

According to an embodiment, the controller is configured to output a constant modulation signal during the initial duration period. This may imply that the temperature of the TOPS is brought from the first level to the second level as quickly as possible.

According to an embodiment, the controller is configured to set the initial duration period to an integer number of clock cycles based on the determined relation between the initial duration period and the period of the clock cycle.

Thus, the initial duration period may be related to an integer number of clock cycles. A desired duration of the initial duration period may be rounded, floored, or ceiled for determining the integer number of clock cycles.

According to an embodiment, the initial portion of the modulation signal may correspond to a constant signal level in a duration of the determined integer number of clock cycles. Such initial portion of the modulation signal may thus be simply output by control using a clock of the controller.

According to an embodiment, the controller further comprises a digital modulator for determining a steady-state portion of the modulation signal following the initial portion.

The digital modulator may facilitate determining the steady-state portion of the modulation signal. Since the driving circuit is to be controlled to toggle between an on state and an off state, the digital modulator may be particularly suited for determining the control signal for controlling the toggling scheme.

According to an embodiment, the digital modulator is a delta-sigma modulator or a pulse width modulator.

These modulators may be efficient in determining a suitable modulation signal for controlling the driving circuit. The delta-sigma modulator may be used in some embodiments since the delta-sigma modulator may provide a higher accuracy in the duty cycle to be used by the driving circuit.

According to an embodiment, the digital modulator is configured to receive input of a fractional part from the pre-distortion module corresponding to a remaining fraction of clock cycles in a relation between the initial period and the period of the clock cycle, wherein the digital modulator uses the fractional part for determining the modulation signal.

As mentioned above, the integer number of clock cycles during which the initial portion of the modulation signal is to be constant may be determined by the pre-distortion module. This may cause a time-quantization error based on a remaining fractional part of the clock cycles in view of the time resolution of the initial portion provided by the clock cycle.

Thanks to determining the remaining fraction of clock cycles, the time-quantization error may be taken into account by the digital modulator which is configured to determine the steady-state portion of the modulation signal. This may ensure fast and accurate control of the temperature of the TOPS when changing the temperature from the first level to the second level.

It should further be realized that, in particular when the remaining fractional part of the clock cycles is determined, lenient requirements are posed on the time resolution provided by the clock cycle. Since any time-quantization error may anyway be taken into account, the clock cycle need not provide a high resolution.

If the desired duration of the initial period is floored for determining the integer number of clock cycles, the remaining fraction will be positive. If the desired duration of the initial period is ceiled for determining the integer number of clock cycles, the remaining fraction will be negative. If the desired duration of the initial period is rounded for determining the integer number of clock cycles, the remaining fraction will be positive or negative depending on a direction of rounding.

This implies that the device may provide an accurate control of the TOPS without requiring a fast clock cycle. Thus, a clock frequency of the controller may be relatively low, such as in an order of MHz. It should be realized that the clock frequency relates to power consumption such that the clock frequency may be set in relation to a desired power consumption of the device.

According to an embodiment, the pre-distortion module is configured to determine the initial portion of the modulation signal based on a look-up table.

Thus, the device may comprise a memory storing a look-up table. The look-up table may be configured to store representations of the initial portion for desired combinations of the first effective power and the second effective power of the driving circuit for bringing the temperature of the TOPS between target temperature levels.

The look-up table may be based on a known, predefined maximum power of the driving circuit and a known, predefined minimum power of the driving circuit. The maximum and minimum power of the driving circuit may be set by a design of the driving circuit.

Parameters for the initial portion stored in the look-up table may be determined using the non-linear function of the first effective power, the second effective power, and the maximum or minimum power of the driving circuit, respectively.

The determination using look-up in a look-up table may imply that the initial portion may be determined in a very fast manner. The pre-distortion module need not perform any calculations for determining the initial portion. However, the look-up table may require extensive memory space and may thus only be used if such memory space is available.

It should be realized that the pre-distortion module may thus in other embodiments be configured to determine the initial portion of the modulation signal based on calculation of the initial portion using the non-linear function.

According to an embodiment, the pre-distortion module is configured to determine the initial portion of the modulation signal based on the non-linear function being formed by a first order model of thermal response of the TOPS.

The non-linear function being formed by a first order model of thermal response may provide a simple, yet accurate manner of determining the initial portion of the modulation signal such that the temperature of the TOPS can be brought quickly from the first level to the second level. Thus, the determining of the initial portion need not require extensive calculations, as the non-linear function may be relatively simple.

The model may represent the thermal response as an electrical model comprising a resistance and a capacitance. Thus, the model may be formed by a resistance-capacitance (RC) thermal circuit. The first order RC model comprises a single resistance and a single capacitance.

It should be realized that any model may be used for representing the thermal response of the TOPS. Different models may take different factors into account and may be more or less complex. In some embodiments, a higher-order Foster or Cauer thermal model, such as a third-order Foster thermal model may be used for defining the non-linear function.

According to an embodiment, the device is configured to control a plurality of TOPSs, wherein the driving circuit is configured to be cyclically sequentially connected to the TOPSs of the plurality of TOPSs for providing power to the TOPSs, wherein the controller is configured to generate the modulation signal for each of the TOPSs in relation to a fraction of time during which the driving circuit is connected to each of the TOPSs.

Since the device is configured to provide a modulation signal to the TOPS, wherein the modulation signal may cause the driving circuit to toggle between an on state and an off state, the modulation signal facilitates time-division multiplexing of providing power from the driving circuit to a plurality of TOPSs.

Hence, the driving circuit may be seen as being in the off state with respect to a particular TOPS when the driving circuit is connected to another TOPS for providing power to the other TOPS. Thus, each TOPS may be connected to the driving circuit during a fraction of time. For instance, if the driving circuit is configured to be connected to 10 TOPSs, each TOPS may only receive power during 1/10 of time. This further implies that a maximum effective power received by each TOPS may be only 1/10 of the maximum power output by the driving circuit.

The driving circuit may thus need to be dimensioned in order to enable output of sufficient power for maintaining target temperature levels of the plurality of TOPSs. However, thanks to the use of time-division multiplexing, a number of driving circuits may be limited even if a large number of TOPSs are used in a system. This facilitates keeping an area of an electronic integrated circuit for driving a plurality of TOPSs limited and keeping a number of connections between an array of TOPSs and the electronic integrated circuit limited.

The time-division of the signal from the driving circuit to the plurality of TOPSs may be taken into account by the controller for determining the initial portion and the steady-state portion of the modulation signal. If the duration of the initial portion for a particular TOPS exceeds a period during which the signal output by the driving circuit is provided to the particular TOPS, the initial portion may be split onto several cycles of the driving circuit being connected to the particular TOPS.

The driving circuit being configured to be cyclically sequentially connected to the TOPSs of the plurality of TOPSs for providing power to the TOPSs implies that the driving circuit may be configured to connect to each of the TOPSs in order by first being connected to a first TOPS, then being connected to a second TOPS, and so on. Once the driving circuit has been connected to all of the TOPSs, the sequence starts over with the driving circuit again being connected to the first TOPS, then being connected to the second TOPS, and so on.

According to an embodiment, the device may be configured to receive a measurement representing a phase shift caused by the TOPS.

For instance, a photodiode may be used. The photodiode may be configured to receive a light signal propagating in the optical waveguide being combined with a reference light signal for providing an interference of light being measured by the photodiode. This may be used for measuring a light signal by the photodiode for determining a phase shift caused by the TOPS. Alternatively, the photodiode may be configured to detect an intensity of the light signal propagating in the optical waveguide, and the signal from the photodiode may be combined with a reference signal for extracting phase information. The measurement may thus provide a representation of the phase shift being caused by the TOPS.

The measurement may provide a relation between a temperature of the TOPS (or a steady-state response of the TOPS based on an effective power output by the driving circuit) and a corresponding phase shift caused by the TOPS. Thus, the measurement may be used as a calibration input for the device. This implies that a desired phase shift may be converted to a needed temperature level of the TOPS and, in turn, to a needed effective power to be output by the driving circuit.

The calibration input may be used for allowing the device to take a non-linear relationship between the power output by the driving circuit and a resulting phase shift into account. Thus, the measurement may allow an even more accurate control of the TOPS and may also allow each TOPS to be individually controlled based on the actual response provided by the TOPS.

The measurement may also or alternatively be used for instantaneous determination of the phase shift caused by the TOPS. Thus, the measurement may be provided as feedback for controlling the modulation signal generated by the controller. For instance, the measurement may identify that the temperature of the TOPS has been brought from the first level past the second level and the measurement may thus provide input for terminating the initial portion in advance compared to the determination of the initial portion provided by the pre-distortion module.

According to a second aspect, there is provided an optical switch, comprising: a waveguide being configured to propagate a light signal; a thermo-optical phase shifter (TOPS) associated with the waveguide and configured to control a refractive index of the waveguide for controlling a direction of light at an output of the waveguide; and a device according to the first aspect for controlling the temperature of the TOPS.

Effects and features of this second aspect are largely analogous to those described above in connection with the first aspect. Embodiments mentioned in relation to the first aspect are largely compatible with the second aspect.

Thus, an optical switch may be provided incorporating the device of the first aspect. This implies that the optical switch may be configured to provide fast switching of the direction of light thanks to the control provided by the device of the first aspect.

The optical switch may for instance be configured to selectively output a light signal into one of a plurality of output waveguides.

It should be realized that the optical switch of the second aspect may be part of an optical switching network. The optical switching network may be configured to pass a light signal through a plurality of optical switches in the optical switching network. This may be used for providing a selective output of the light signal, when a large number of alternative outputs may be required.

Thanks to each optical switch providing a fast switching of the direction of light output by the optical switch, the switching network may be operated in a fast manner.

It should be realized that a separate device according to the first aspect may be associated with each optical switch of the optical switching network. However, according to an alternative, a device according to the first aspect may be shared by a plurality of optical switches, wherein the driving circuit may be configured to be cyclically sequentially connected to the TOPSs.

According to a third aspect, there is provided an optical device, comprising: a plurality of waveguides, each waveguide being configured to propagate a light signal; a plurality of thermo-optical phase shifters (TOPSs), wherein each TOPS is associated with a respective waveguide of the plurality of waveguides and wherein each TOPS is configured to control a refractive index of the respective waveguide; and one or more devices according to the first aspect for controlling the temperature of the plurality of TOPSs.

Effects and features of this third aspect are largely analogous to those described above in connection with the first and second aspects. Embodiments mentioned in relation to the first and second aspects are largely compatible with the third aspect.

The optical device may thus include a plurality of waveguides and a plurality of TOPSs for controlling phase shift in the waveguides. This implies that light signals in a plurality of waveguides may be controlled by the optical device.

The device according to the first aspect provides fast and accurate control of the phase shift provided by each TOPS.

According to an embodiment, the one or more devices are configured to control the temperature of the TOPSs within a range of temperatures corresponding to a range of phase shifts of the light signal extending over at least 500 degrees, such as over at least 720 degrees.

It should be realized that a phase shift of 360 degrees has no net effect. Thus, the TOPS need not provide phase shifts in a range larger than 360 degrees in order to provide full control of a phase of the light signal propagating in the waveguide.

However, the range of temperatures of the TOPS providing a larger range of phase shifts, such as at least 500 degrees, implies that the driving circuit need not be necessarily used close to end points of the available range. At the end points, the driving circuit needs to constantly output the maximum power or the minimum power, respectively. This further implies that a settling time required for the TOPS to reach the temperature level at the end points may also be larger than in a center portion of the available range.

Hence, thanks to the device according to the first aspect being configured to control the temperature of the TOPS within a relatively large range of temperatures, the target level of the temperature of the TOPS may be quickly reached for each target level of the temperature of the TOPS that is actually to be used.

Having a range of phase shifts of the light signal extending over at least 500 degrees implies that the phase shifts may be controlled over a full range of 360 degrees with some margin. Having a range of phase shifts of the light signal extending over at least 720 degrees implies that there is a substantial margin to end points of the control for ensuring fast control to any target level of the temperature of the TOPS.

Having a range of phase shifts of the light signal larger than 360 degrees, such as at least 500 degrees or at least 720 degrees, allows the device for controlling the temperature of the TOPS to be tolerant for production variations.

In addition, a digital modulator, such as a delta-sigma modulator or a pulse width modulator, may generate low frequency noise if the target effective power is close to zero. Hence the range of target temperatures corresponding to a range of desired phase shifts of the light signal may be offset above zero such that target effective powers close to zero need not be used.

In other words, the one or more devices are configured to control the temperature of the TOPSs within a range of temperatures corresponding to a range of phase shifts of the light signal for allowing the range of temperatures to be offset from a minimum (zero) power and/or for allowing a 360 degree range of phase shifts to be provided within production variation tolerances.

According to an embodiment, the optical device further comprises a plurality of light output elements, wherein each of the plurality of waveguides is connected to a respective light output element of the plurality of light output elements and wherein the optical device is configured to control relative phase shifts of the light signals in the waveguides for forming an optical phased array providing beam steering of an output light beam.

Hence, the fast controlling of temperature of TOPSs may be used in an optical phased array. The possibility of quickly bringing the temperature of the TOPS from a first level to a second level and hence quickly switching a level of phase shift provided by the TOPS may be particularly useful in an optical phased array.

In the optical phased array, the phase shift of a plurality of TOPSs may need to be controlled in order to change a direction of an output light beam. Thus, since a plurality of TOPSs need to be controlled, it is highly beneficial if the control of an individual TOPS is provided in a fast manner. Providing a high speed of setting the phase shift of the TOPS also enables using a single device for controlling a plurality of TOPSs in a time-division multiplexed manner.

According to an embodiment, the optical device is configured to scan a direction of the output light beams by changing the relative phase shifts of the light signals.

When a direction of the output light beam is scanned over a field of view, e.g., by scanning in one or two dimensions, the direction of the output light beam needs to be changed multiple times for achieving the scan. For each change of the direction of the output light beam, the phase shift provided by each of the TOPSs may need to be changed.

Thus, scanning of the direction of the output light beams involves multiple changes of the phase shifts provided by a plurality of TOPSs. Therefore, in order for the scanning to be provided in a fast manner, it would be highly beneficial to provide the changing of the phase shifts in a fast manner. Hence, the device for controlling the TOPS is particularly suited to be used in the optical device that scans the direction of output light beams. This may for instance be suitable in a light detection and ranging (LIDAR) application, wherein a field of view may be scanned for detecting presence of target objects in the field of view.

According to a fourth aspect, there is provided a method for controlling a thermo-optical phase shifter (TOPS) for affecting an optical waveguide based on temperature of the TOPS, said method comprising: generating a modulation signal for controlling a driving circuit providing power to the TOPS, wherein generating the modulation signal comprises determining an initial portion of the modulation signal for bringing a temperature of the TOPS from a first level corresponding to a first effective power of the driving circuit to a second level corresponding to a second effective power of the driving circuit, wherein, in case the second effective power is larger than the first effective power, the initial portion of the modulation signal is based on a non-linear function of the first effective power, the second effective power, and a maximum power of the driving circuit, and in case the second effective power is smaller than the first effective power, the initial portion of the modulation signal is based on a non-linear function of the first effective power, the second effective power, and the minimum power of the driving circuit; providing the modulation signal to the driving circuit; and outputting power from the driving circuit to the TOPS, wherein outputting of power comprises toggling between an on state of the driving circuit for outputting a maximum power and an off state of the driving circuit for outputting a minimum power, wherein the modulation signal controls the toggling scheme of the driving circuit for bringing the temperature of the TOPS to the second level and for maintaining the temperature of the TOPS at the second level based on the second effective power output by the driving circuit corresponding to the second level of temperature of the TOPS.

Effects and features of this fourth aspect are largely analogous to those described above in connection with the first, second, and third aspects. Embodiments mentioned in relation to the first, second, and third aspects are largely compatible with the fourth aspect.

This may allow a power efficient and fast manner of bringing the temperature of the TOPS from the first level to the second level.

According to a fifth aspect, there is provided a computer program product comprising computer-readable instructions which when executed by a processing unit cause the processing unit to perform a method comprising:

receiving instructions that a temperature of a thermo-optical phase shifter (TOPS) is to be brought from a first level corresponding to a first effective power of a driving circuit to a second level corresponding to a second effective power of the driving circuit.

determining a modulation signal for controlling the driving circuit comprising determining an initial portion of the modulation signal, wherein, in case the second effective power is larger than the first effective power, the initial portion of the modulation signal is based on a non-linear function of the first effective power, the second effective power, and a maximum power of the driving circuit, and in case the second effective power is smaller than the first effective power, the pre-distortion module is configured to determine the initial portion of the modulation signal based on a non-linear function of the first effective power, the second effective power, and the minimum power of the driving circuit.

Effects and features of this fifth aspect are largely analogous to those described above in connection with the first, second, third, and fourth aspects. Embodiments mentioned in relation to the first, second, third, and fourth aspects are largely compatible with the fifth aspect.

The computer program product may thus provide computer-readable instructions for allowing a method to be implemented for determining the modulation signal that is used for controlling the driving circuit. This allows the functionality of determining the modulation signal to be provided to any processing unit.

The computer program product may comprise a non-transient computer-readable medium for carrying the computer-readable instructions. Alternatively, in other embodiments, the computer program product may comprise a signal carrying the computer-readable instructions, e.g., for communicating the computer program product to the processing unit through wired or wireless communication.

The determination of the initial portion of the modulation signal may be implemented in a pre-distortion module, forming a part of the computer program product.

Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.

Fig. 1 is a schematic view of an optical switch.
Fig. 2 is a schematic view of a device for controlling a thermo-optical phase shifter according to an embodiment.
Fig. 3 is a schematic view of a control chain provided by the device of Fig. 2.
Figs 4a-b are graphs illustrating a comparison of a speed of changing a temperature of the thermo-optical phase shifter based on different types of control.
Fig. 5 is a graph illustrating speed-up of change of temperature of the thermo-optical phase shifter based on the types of control.
Fig. 6 is a schematic view of an optical device comprising an optical phased array.
Fig. 7 is a flow chart of a method according to an embodiment.

Detailed description

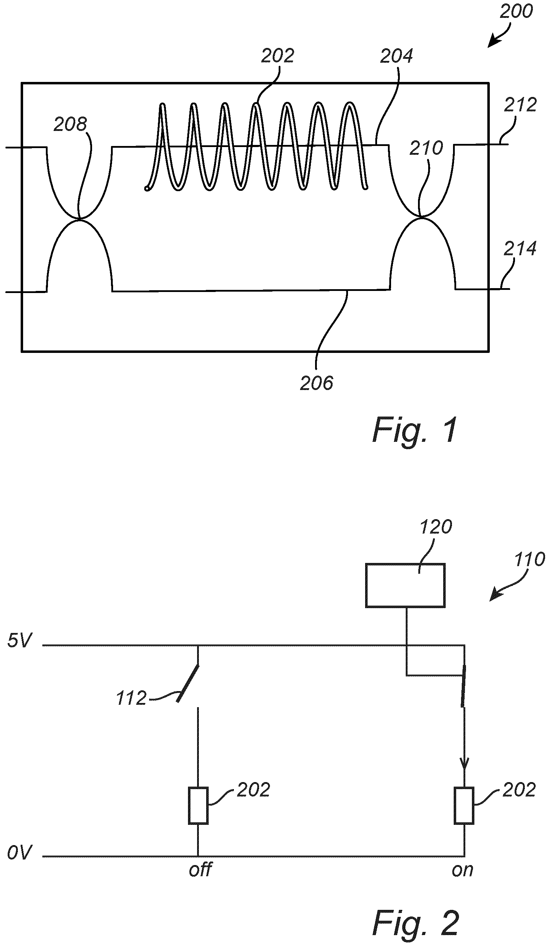

Referring now to Fig. 1, an optical switch 200 will be briefly described. The optical switch 200 comprises a first optical waveguide 204 and a thermo-optical phase shifter (TOPS) 202 for affecting propagation of a light signal in the first optical waveguide 204. The optical switch 200 using one or more TOPSs may be implemented in many different manners as would be appreciated by a person skilled in the art.

The optical switch 200 as shown in Fig. 1 comprises a first optical waveguide 204 and a second optical waveguide 206. The optical switch 200 further comprises an input coupler 208, which may be configured to receive input light signal(s) in one or two input ports and to split the input light signal(s) into the first and second optical waveguides 204, 206. Typically, a single light signal is received and is split such that 50% of intensity of the light signal forms a first portion of the light signal propagating in the first optical waveguide 204 and 50% of intensity of the light signal forms a second portion of the light signal propagating in the second optical waveguide 206.

Thus, portions of the light signal are propagated through the first and second optical waveguides 204, 206, respectively, to an output coupler 210. The first and second portions of the light signal are combined in the output coupler 210. The output coupler 210 may be configured to provide a distribution of an output light signal onto two output waveguides 212, 214 in dependence of a phase difference of the first and second portions of the light signal reaching the output coupler 210. Thus, by changing a phase difference between the first and second portions of the light signal, a direction of the output light signal may be changed.

The optical waveguides 204, 206 may be arranged in any manner for guiding a light signal. The optical waveguides 204, 206 may for instance be configured to extend along a longitudinal direction and be configured to propagate the light signal along the longitudinal direction. For instance, the optical waveguide 204, 206 may comprise a core material surrounded by a sheath material, such that a light signal propagating in the core material is maintained in the core material by total internal reflection at interface between the core material and the sheath material.

For instance, the optical waveguides 204, 206 may form part of a photonic integrated circuit (PIC) providing a compact form factor.

As mentioned above, the optical switch 200 comprises a TOPS 202 associated with the first optical waveguide 204. The TOPS 202 is configured to control a temperature of the first optical waveguide 204. For instance, the TOPS 202 may comprise an electrically controllable heater, such that the temperature of the heater is dependent on a power of an electrical signal received by the heater. The heater may for instance be formed as a wire being wound around the first optical waveguide 204 for controlling the temperature of the first optical waveguide 204. The heater may form a resistor which is configured to dissipate heat based on receiving power of the electrical signal. It should however be realized that the TOPS 202 may be implemented in different manner for providing a control of the temperature of the first optical waveguide 204.

The temperature of the first optical waveguide 204 may affect a refractive index of the first optical waveguide 204. Thus, if the temperature is increased, the refractive index of the first optical waveguide 204 increases. An increase of the refractive index implies that an optical path length through the first optical waveguide 204 increases and hence the first portion of the light signal is delayed.

Thus, increasing of the temperature of the first optical waveguide 204 by the TOPS 202 provides a phase shift of the first portion of the light signal at the output coupler 210. After combination in the output coupler 210 and by controlling of the phase of the first portion of the light signal by the TOPS 202, the first and the second portions of light can provide constructive interference (ON) at output waveguide 212 and provide destructive interference (OFF) at output waveguide 214, or vice versa. Thus, the TOPS 202 provides a convenient manner of controlling a direction of light at the output of the waveguide 204 being connected to the output coupler 210.

As will also be described below, a TOPS may be used in other applications, wherein a control of phase shift of a light signal is desired.

Referring now to Fig. 2, a device 100 for controlling the TOPS 202 that affects an optical waveguide 204 will be described. It should be realized that the TOPS 202 may be used in any application and is not necessarily part of the optical switch 200 as described above.

The device 100 comprises a driving circuit 110 that is configured to provide power to the TOPS 202. The driving circuit 110 may thus be configured to output an electrical signal to the TOPS 202, such as a current, which may be converted by the TOPS 202 into a temperature of the TOPS 202.

The driving circuit 110 is configured to toggle between an on state for outputting a maximum power and an off state for outputting a minimum power. A toggling scheme of the driving circuit controls an effective power output by the driving circuit 110. Thus, the driving circuit 110 may be configured to output the maximum power during a first fraction of time and the minimum power during a second fraction of time. The percentage of the first fraction of time and the second fraction of time, respectively, in relation to a total time period may thus define an average power being output forming the effective power output by the driving circuit 110.

The effective power output by the driving circuit 110 may correspond to a temperature of the TOPS 202, such that the effective power output by the driving circuit 110 may be used for controlling the temperature of the TOPS 202 and hence the phase shift provided to the light signal propagating in the optical waveguide 204.

As shown in Fig. 2, the driving circuit 110 may be configured to toggle between the on state and the off state based on a switch 112. The driving circuit 110 may receive a constant voltage signal, which may be selectively applied across the TOPS 202 by turning on the switch 112 (illustrated in right part of the driving circuit 110 in Fig. 2) and by turning off the switch 112 (illustrated in left part of the driving circuit 110 in Fig. 2). Thus, it should be understood that Fig. 2 illustrates two different states of the same switch 112.

Losses in the switch 112 may be very low, such that the driving circuit 110 may provide an efficient output of power to the TOPS 202.

The driving circuit 110 may further be configured to receive a modulation signal. This modulation signal may be provided as input for controlling the state of the switch 112. Thus, the modulation signal may control the toggling scheme of the driving circuit 110 for controlling the effective power output by the driving circuit 110.

The device 100 may comprise a controller 120 for generating the modulation signal. The controller 120 may be configured to receive input of a target temperature of the TOPS 202 and may be configured to determine a corresponding effective power to be output by the driving circuit 110 for determining a modulation signal to be output to the driving circuit 110.

The controller 120 may be configured to generate the modulation signal in digital domain. The modulation signal may be provided to the driving circuit 110 as a digital control signal.

The controller 120 may at least be partially implemented as a processing unit, such as a general-purpose processing unit, e.g., a central processing unit (CPU), which may execute instructions of one or more computer programs in order to implement functionality of the controller 120. The controller 120 may also or alternatively be implemented as firmware arranged e.g., in an embedded system, or as a specifically designed processing unit, such as an Application-Specific Integrated Circuit (ASIC) or a Field-Programmable Gate Array (FPGA). It should be realized that the controller 120 may be implemented as a combination of hardware and software components.

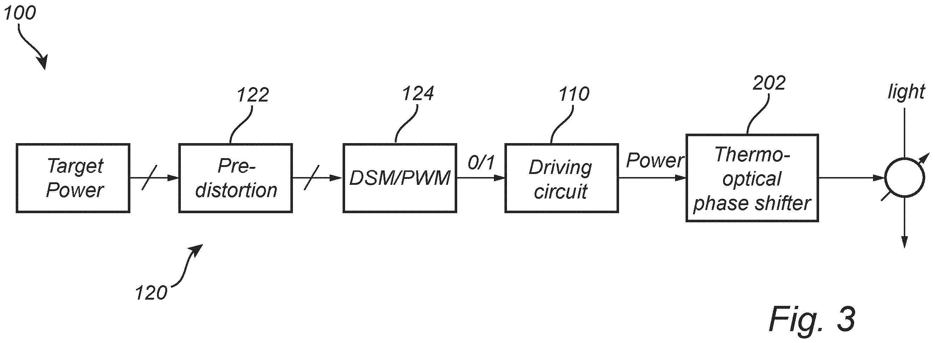

Referring now to Fig. 3, a control chain for controlling the TOPS will be further described.

The target electrical power levels to be dissipated in the resistor of the TOPS 202 may be defined by software. This target electrical power corresponds to a temperature of the TOPS 202. The target power may also define how long each power level should be maintained before stepping to the next level in an application where the TOPS 202 is used for changing phase shifts provided by the TOPS 202 in a pre-defined pattern.

The controller 120 further comprises a pre-distortion module 122 which has a function to ensure that the settling time of the TOPS 202 is short and preferably to minimize the settling time. The pre-distortion module 122 is configured to determine an initial portion of the modulation signal, i.e., a waveform of the modulation signal at a start of the modulation signal when the target power of the TOPS 202 is changed. The initial portion may be defined as a constant power level (i.e., a maximum power or a minimum power) to be output by the driving circuit 110 during an initial period. Thus, determining of the initial portion may comprise determining whether the maximum power or minimum power is to be used and determining a duration of the initial period.

The controller 120 further comprises a digital modulator 124 for determining a steady-state portion of the modulation signal, wherein the steady-state portion is configured to provide a toggling scheme for outputting the effective power by the driving circuit 110 corresponding to the temperature of the TOPS 202 to be provided and, hence, the target power to be dissipated by the TOPS 202. The steady-state portion is to be provided following the initial portion of the modulation signal.

The digital modulator 124 may for instance be a delta-sigma modulator (DSM) or a pulse width modulator (PWM).

An output from the digital modulator 124 may be a digital signal, such as an unsigned digital signal, describing a duty-cycle of a binary PWM/DSM signal generated by the digital modulator 124.

The modulator may be clocked at a rate $T_{clk}$ and used for controlling the driving circuit 110 that is supplying maximum power ($P_{max}$ Watt), when activated, and minimum power ($P_{min}$ Watt, such as 0 Watt), when off. The target effective power delivery at a step k in the pattern of phase shift may be expressed as $P_k$. This target effective power may be realized by rapidly toggling the driving circuit 110 on and off such that the duty cycle of the generated signal is $P_k/P_{max}$. This means that the minimum and maximum power the driving electronics 110 can supply continuously are $P_{min}$ (zero) and $P_{max}$, respectively. It should be noted that power has been used as unit of the output provided by the TOPS 202. However, as there is a linear relationship therebetween, the output may alternatively be expressed as angular degrees, or radials, or in voltage-squared, current-squared, or average temperature of the waveguide 204.

The pre-distortion module 122 is configured to determine an initial portion of the modulation signal to compensate for a slow settling time of the TOPS 202. However, since the output of the driving circuit 110 is limited to a range from $P_{min}$ (zero) to $P_{max}$, the pre-distortion module 122 may be configured to take the range into account when determining the initial portion.

It should be realized that the modulation signal need not necessarily be constant during the initial portion. For instance, the modulation signal may be set during the initial portion to provide a duty cycle of the driving circuit 110. If the effective power of the driving circuit 110 is to be increased, the duty cycle during the initial portion should be larger than the duty cycle of the second effective power. If the effective power of the driving circuit 110 is to be decreased, the duty cycle during the initial portion should be larger than the duty cycle of the second effective power. In addition, the duty cycle of the driving circuit 110 need not be constant during the initial portion.

The pre-distortion module 122 is configured to determine the initial portion of the modulation signal based on a non-linear function of the first effective power, the second effective power, and the maximum power $P_{max}$ of the driving circuit 110 when the temperature of the TOPS 202 is to be increased and as a non-linear function of the first effective power, the second effective power, and the minimum power $P_{min}$ (e.g., 0 W) of the driving circuit 110 when the temperature of the TOPS 202 is to be decreased.

The pre-distortion module 122 may be configured to determine the initial portion of the modulation signal based on the non-linear function being formed by a first order model of thermal response of the TOPS 202. This implies that the TOPS 202 may be modeled by a resistance-capacitance (RC) thermal circuit having a time constant $\tau$.

The pre-distortion module 122 may be configured to determine whether the new target power $P_k$ is larger than a present power $P_{k-1}$. If so, the pre-distortion module 122 may determine a duration during which the driving circuit 110 is to be controlled to output maximum power $P_{max}$. If the new target power $P_k$ is smaller than the present power $P_{k-1}$, the pre-distortion module 122 may instead determine a duration during which the driving circuit 110 is to be controlled to output maximum power $P_{min}$.

The pre-distortion module 122 may be configured to determine the initial period in relation to a period of a clock cycle $T_{clk}$ for controlling the driving circuit 110. The period of the clock cycle provides a temporal resolution of the modulation signal.

The pre-distortion module 122 may be configured to determine the initial period as an integer number n of clock cycles. Using the first order model, the pre-distortion module 122 may determine the integer number of clock cycles based on the following expressions:

$$n = \begin{cases} -\beta^{-1}(\log(P_{max} - P_k) - \log(P_{max} - P_{k-1})) & \forall P_k > P_{k-1} \\ -\beta^{-1}(\log(P_k - P_{min}) - \log(P_{k-1} - P_{min})) & \forall P_k < P_{k-1} \end{cases}$$

where

$$\beta = \frac{T_{clk}}{\tau},$$

and log refers to a natural logarithm.

The controller 120 may thus be configured to set the initial portion of the modulation signal to be constant at $P_{min}$ (e.g., zero W) or $P_{max}$, respectively, for an integer number n of clock cycles based on the determined relation between the initial period and the period of the clock cycle.

The above determination is based on a first order model of thermal response. This may provide an accurate representation of the thermal response of the TOPS 202 and the determination of the initial portion of the modulation signal may also be fairly simple to perform based on the first order model.

However, it should be realized that the thermal response may be more complex. For instance, the thermal response may be described by a Foster thermal model or an equivalent Cauer model. The thermal response may thus be described by a monotonic function $f(x)$.

The thermal response provides a unique 1-to-1 mapping of input to output such that the function can be unambiguously inverted. Thus, for a general function $f(x)$ representing the thermal response, the integer number of clock cycles may be determined based on the following expressions:

$$n = \begin{cases} -\beta^{-1}f^{-1}\left(\frac{P_{max} - P_k}{P_{max} - P_{k-1}}\right) & \forall P_k > P_{k-1} \\ -\beta^{-1}f^{-1}\left(\frac{P_k - P_{min}}{P_{k-1} - P_{min}}\right) & \forall P_k < P_{k-1} \end{cases}.$$

It should be noted that a ratio of the powers determines the value of n. Hence, any type of signal linearly proportional to the power can be used to describe the signals. For instance, the temperature of the waveguide 204 may be used, such as average temperature over a length of the waveguide 204.

In case of a Foster model, the thermal response is described by $N_f$ components, where the $k$-th component is described by a thermal resistance $R_k$ represented in units K/mW and a time constant $\tau_k$ represented in unit seconds. The (average) temperature impulse response of the waveguide 204 caused by the TOPS 202 may thus be given by:

$$T(t) = \sum_{k=0}^{N_f-1} R_k e^{t/\tau_k}.$$

The function $f(x)$ is linearly proportional to $T(t)$ normalized with regard to a sum of the thermal resistances $R_k$. Thus, $f(x) = T(t)/\sum R_k$, forming a function which can be inverted. It should be realized that if such a complex representation of the thermal response, a numerical method may need to be used for determining a value of the inverted function.

As described above, an integer number n of clock cycles during which the modulation signal is to be maintained constant to $P_{max}$ or $P_{min}$, respectively, may be determined. However, a fractional part w of the determined number of clock cycles may also be used in controlling the generation of the modulation signal.

The fractional part may be seen as an additional special clock cycle during which output from the pre-distortion module 122 is a linearly weighted average. In case the temperature of the TOPS 202 is to be increased, the additional power $P_w$ to be provided based on the fractional part may be expressed as:

$$P_w = wP_{max} + (1-w)P_k,$$

where $w$ denotes a fractional part of $n$.

The digital modulator 124 may be configured to receive input of the fractional part from the pre-distortion module 122. The digital modulator 124 may thus use the fractional part for determining the modulation signal. Hence, the fractional part may affect the output from the digital modulator 124 such that the fractional part is taken into account and that a target power to be dissipated by the TOPS 202 is more quickly reached.

The TOPS 202 may have a (weakly) non-linear relationship between squared voltage of the modulation signal provided to the TOPS 202 and the phase shift in the waveguide 204 provided by the TOPS 202. This non-linear relationship may for example be due to a temperature dependency of a resistance of the heater. The non-linear relationship can be measured using a photodiode, which may for instance be integrated with the TOPS 202 and the waveguide 204. The photodiode may be used for determining a relationship between a steady-state modulation signal and a corresponding phase shift.

The non-linear relationship only affects a mapping of target levels of the power to be dissipated by the TOPS 202 to desired phase shift but does not alter a response for bringing the TOPS 202 from a first level to a second target level. Thus, the non-linear relationship may be used as a calibration of the TOPS 202 for ensuring that the TOPS 202 is controlled to reach an appropriate temperature level for causing the desired phase shift.

In addition, mapping of target levels of the power to be dissipated by the TOPS 202 to desired phase shift may also take into account thermal coupling and possible counter-measures between TOPSs, in a device comprising a plurality of TOPSs.

The controller 120 uses an accurate model of the thermo-optical response of the TOPS 202. The photodiodes may also be used to measure the temporal phase response of the TOPS 202 for determining the actual response of the TOPS 202 when the TOPS 202 is brought from a first level to a second level. Other sources of information for determining the response of the TOPS 202 could be thermal simulations.

It should be realized that the integer number $n$ of clock cycles to be used in the initial portion and the fractional part $w$ may be pre-computed in software for the combinations of target power $P_k$ in relation to present power $P_{k-1}$ at a desired resolution of the power to be output by the TOPS 202. This information may then be stored in a large LUT and the pre-distortion module 122 may thus be configured to determine the initial portion of the modulation signal based on the LUT.

It should be realized that if the target power $P_k$ is equal to $P_{min}$ or $P_{max}$, the required number of clock cycles $n$ of the initial portion will be infinite. Also, if $P_k$ is close to either of the extreme values, the value of $n$ will become impractically large.

This implies that, in order to provide an effective reduction of the settling time by the initial portion of the modulation signal, the target power $P_k$ should not be too close to an extreme value. This may be achieved by ensuring that the target power levels are in a range well away from either extreme value.

Thus, the devices 100 may be configured to control the temperature of the TOPS 202 within a range of temperatures corresponding to a range of phase shifts of the light signal in the waveguide 204 extending over at least 500 degrees, such as over at least 720 degrees. Thus, the range of available phase shifts may be much larger than the necessary phase shifts, since the phase shifts in the waveguide 204 need only be provided within a range of 360 degrees.

Having a margin of the range of available phase shifts may further be advantageous when using a PWM/DSM modulation signal, as a duty-cycle close to zero or 1 may lead to low frequency harmonics that may not be filtered out by the TOPS 202. A practical, rule-of-thumb value for $P_{max}$ is 3 to 4 times the power needed for providing a phase shift of 180 degrees.

The device 100 has been described above in relation to controlling a single TOPS 202. However, it should be realized that the same device 100 may be used for controlling a plurality of TOPSs, which may for instance be arranged in an array for controlling phase shifts in a plurality of waveguides.

The use of the modulation signal, which may toggle the output from the driving circuit between maximum power and minimum power, may be particularly suitable for time-multiplexed control of a plurality of TOPSs. Thus, the driving circuit 110 may be configured to be connected in a time-multiplexed manner to a plurality of TOPSs. In other words, the driving circuit 110 may be configured to be cyclically sequentially connected to the TOPSs of the plurality of TOPSs for providing power from the driving circuit 110 to the TOPSs.

The controller 120 may be configured to generate the modulation signal for each of the TOPSs in relation to a fraction of time during which the driving circuit 110 is connected to each of the TOPSs.

The driving circuit 110 may be configured to use row-column addressing for providing a sequence in which the driving circuit 110 is connected to the plurality of TOPSs. For instance, the driving circuit 110 may first be sequentially connected to each TOPS in a first row of an array and may thereafter be connected to a second row of the array for being sequentially connected to each TOPS in the second row, and so on.

The time-multiplexing approach of row-column addressing implies that the number of connections to the array of TOPSs may be reduced and allows a single driving circuit 110 to control multiple TOPS, which reduces area.

The phase shift caused by each TOPS is controlled by time-averaged power supplied to the TOPS, which is realized by controlling the duty cycle of the signal provided to the TOPS. The duty cycle is determined both by the fraction of time during which the driving circuit 110 is connected to the TOPS in the time-multiplexed connection and the toggling scheme of the driving circuit 110 during this time. Thus, the toggling scheme may be set in view of the fraction of time for achieving a desired time-averaged power supply to each TOPS.

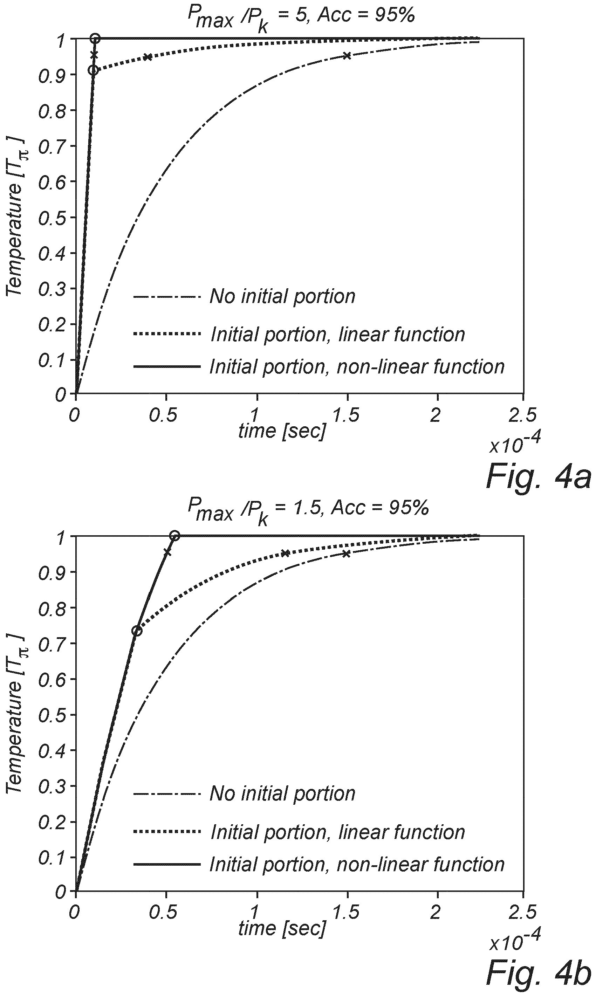

Referring now to Figs 4-5, speed of reaching a second temperature level of the TOPS 202 from a first temperature level of the TOPS is compared for different modulation signals.

In a first type of control for the comparison, the modulation signal does not use any initial portion of the modulation signal (i.e., the modulation signal only comprises a steady-state portion corresponding to the desired temperature level). In a second type of control for the comparison, the modulation signal uses an initial portion of the modulation signal that is based on a linear relationship of the difference between the second temperature level and the first temperature level. In the third type of control for the comparison, the modulation signal uses an initial portion of the modulation signal determined using the non-linear function according to the first order thermal model set forth above.

In Fig. 4a, a temporal response of the TOPS 202 is illustrated for bringing the temperature of the TOPS from a first level corresponding to a minimum effective power of the driving circuit being 0W to a second level, wherein a ratio between the maximum power $P_{max}$ of the driving circuit and the target power $P_k$ corresponding to the second level is $P_{max}/P_k = 5$.

The temporal response according to the first type of control is indicated by a dashed line. The temporal response according to the second type of control is indicated by a dotted line. The temporal response according to the third type of control is indicated by a solid line. A time point at which 95% of the target temperature level is reached is indicated by a cross on each of the curves. In addition, a time point at which the initial portion of the modulation signal ends and a steady-state portion starts is indicated by a circle for the temporal response according to the second and third types of control.

As may be seen, 95% of the target temperature level is reached earliest for the third type of control. Thus, generation of the modulation signal using an initial portion based on the non-linear function of the first effective power, the second effective power, and the maximum or minimum power of the driving circuit 110 provides a fast manner of setting the phase shift to be provided by the TOPS 202 to a new level.

Fig. 4b corresponds to Fig. 4a except that the ratio between the maximum power $P_{max}$ and the target power $P_k$ now is set to $P_{max}/P_k = 1.5$. As may be seen in Fig. 4b, the speed provided by the third type of control is superior to the first and second types of control.

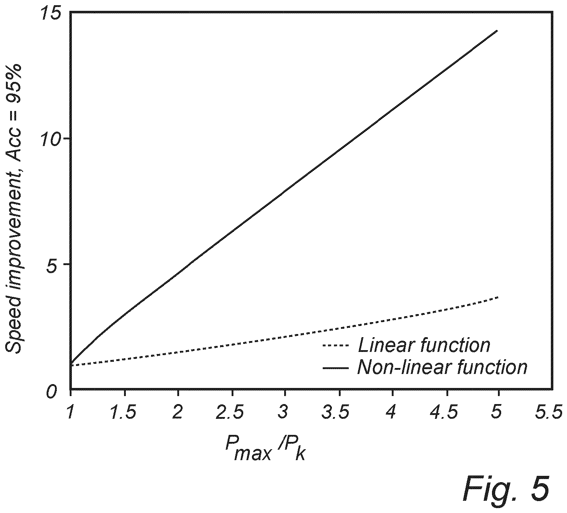

In Fig. 5, an achieved speed-up of reaching 95% of the target power provided by the second and third types of control relative to the first type of control with no initial portion of the modulation signal is illustrated. As is seen in Fig. 5, the relative speed improvement is much better for the third type of control compared to the second type of control.

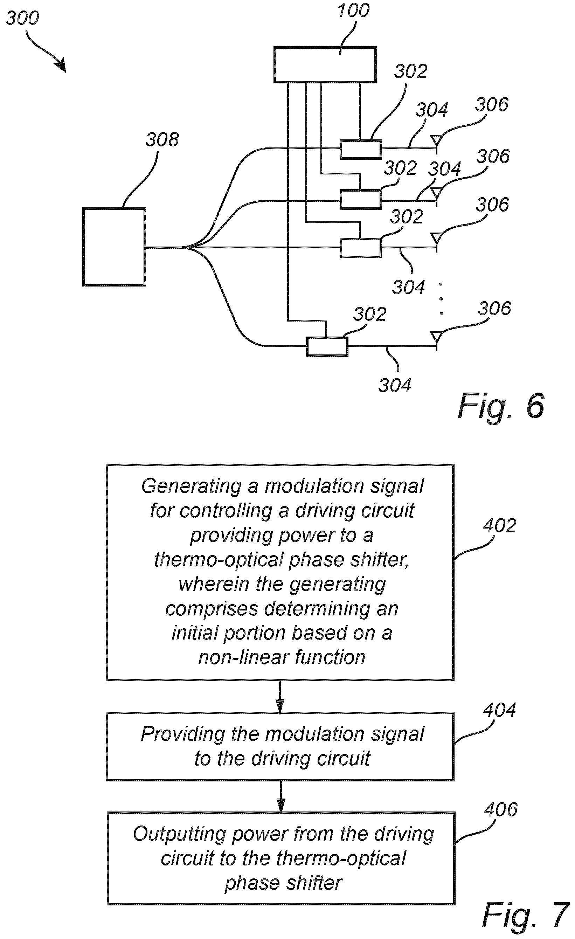

Referring now to Fig. 6, an optical device 300 is shown. The optical device 300 comprises a plurality of optical waveguide 304 and a plurality of TOPSs 302. Each TOPS 302 may be associated with a respective optical waveguide 304 for affecting propagation of the light signal in the optical waveguide 304. The TOPS 302 may be configured to control a refractive index of the optical waveguide 304 based on a temperature of the optical waveguide 304 being controlled by the TOPS 302.

The optical device 300 may comprise one or more devices 100 as described above. Thus, each device 100 may be configured to control a single TOPS 302, or each device 100 may be configured to control a plurality of TOPSs 302 by providing the signal from the driving circuit 110 to the plurality of TOPSs in a time-multiplexed manner as described above.

Thus, a single device 100 may be used or a plurality of devices 100 may be used, wherein each of the plurality of devices 100 may control one or more TOPSs.

It should be realized that an optical device 300 comprising a plurality of TOPSs 302 associated with a plurality of optical waveguides 304 may be used in numerous applications.

The optical device 300 shown in Fig. 6 is configured to form an optical phased array providing beam steering of an output light beam output by the optical device 300.

The optical device 300 comprises a plurality of light output elements 306. Each of the plurality of optical waveguides 304 is connected to receive a light signal. The light signal received by each of the plurality of waveguides 304 may for instance be provided by a splitter 308, which is configured to receive an input light signal and split the input light signal into respective light signals in each of the plurality of waveguides 304. Each of the plurality of optical waveguides 304 is further configured to propagate the respective light signal to a respective light output element 306 of the plurality of light output elements.

The optical device 100 is configured to control relative phase shifts of the light signals in the optical waveguides 304. Thus, the relative phase shifts may control interference of light output by the respective light output elements 306, which in far-field creates the output light beam, wherein a direction of the output light beam formed by the combination of light signals output by the respective light output elements 306 is controlled by the relative phase shifts.

It should be realized that if a direction of the output light beam is to be changed, the phase shift provided by each of the TOPSs 302 may need to be changed. Thanks to the device 100 being able to quickly bring the temperature of the TOPS 302 from a first level to a second level and hence quickly switching a level of phase shift provided by the TOPS 302, the device 100 may be particularly useful in an optical phased array.

The optical device 300 may be configured to scan a direction of the output light beams by changing the relative phase shifts of the light signals. This implies that the optical device 300 may be configured to scan an output light beam over a field of view, e.g., by scanning the direction of the output light beam in one or two dimensions.

Scanning of the direction of the output light beams involves multiple changes of the phase shifts provided by a plurality of TOPSs 302. Therefore, thanks to using the device(s) 100 for controlling the TOPSs 302, the scanning may be provided in a fast manner.

Scanning of direction of output light beams may for instance be suitable in a light detection and ranging (LIDAR) application, wherein a field of view may be scanned for detecting presence of target objects in the field of view.

Referring now to Fig. 7, a method for controlling a TOPS for affecting an optical waveguide based on temperature of the TOPS will be briefly described.

The method comprises generating 402 a modulation signal for controlling a driving circuit providing power to the TOPS. Generating of the modulation signal comprises determining an initial portion of the modulation signal for bringing a temperature of the TOPS from a first level corresponding to a first effective power of the driving circuit to a second level corresponding to a second effective power of the driving circuit.

In case the second effective power is larger than the first effective power, the initial portion of the modulation signal is based on a non-linear function of the first effective power, the second effective power, and a maximum power of the driving circuit, whereas, in case the second effective power is smaller than the first effective power, the pre-distortion module is configured to determine the initial portion of the modulation signal based on a non-linear function of the first effective power, the second effective power, and the minimum power of the driving circuit.

Generating of the modulation signal may further include determining a steady-state portion providing the second effective power of the driving circuit corresponding to the second level of the temperature of the TOPS. The steady-state portion may be determined by a digital modulator for providing a toggling scheme of controlling the driving circuit to provide the second effective power.

The method further comprises providing 404 the modulation signal to the driving circuit and outputting 406 power from the driving circuit to the TOPS.

The outputting of power comprises toggling between an on state of the driving circuit for outputting a maximum power and an off state of the driving circuit for outputting a minimum power, wherein the modulation signal controls the toggling scheme of the driving circuit for bringing the temperature of the TOPS to the second level and for maintaining the temperature of the TOPS at the second level based on the second effective power output by the driving circuit corresponding to the second level of temperature of the TOPS.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1.    A device (100) for controlling a thermo-optical phase shifter, TOPS, (202; 302) for affecting an optical waveguide (204; 304) based on temperature of the TOPS (202; 302), said device (100) comprising:

a driving circuit (110) configured to provide power to the TOPS (202; 302), wherein the driving circuit (110) is configured to toggle between an on state for outputting a maximum power and an off state for outputting a minimum power, wherein a toggling scheme of the driving circuit (110) controls an effective power output by the driving circuit (110), and wherein the effective power output by the driving circuit (110) corresponds to a temperature of the TOPS (202; 302); and

a controller (120) configured to generate a modulation signal and provide the modulation signal to the driving circuit (110) for controlling the toggling scheme of the driving circuit (110), wherein the controller (120) comprises a pre-distortion module (122) for determining an initial portion of the modulation signal for bringing the temperature of the TOPS (202; 302) from a first level corresponding to a first effective power of the driving circuit (110) to a second level corresponding to a second effective power of the driving circuit (110), wherein, in case the second effective power is larger than the first effective power, the pre-distortion module (122) is configured to determine the initial portion of the modulation signal based on a non-linear function of the first effective power, the second effective power, and the maximum power of the driving circuit (110), and in case the second effective power is smaller than the first effective power, the pre-distortion module (122) is configured to determine the initial portion of the modulation signal based on a non-linear function of the first effective power, the second effective power, and the minimum power of the driving circuit (110).

2. The device according to claim 1, wherein the pre-distortion module (122) is configured to determine the initial portion as an initial duration period, wherein the pre-distortion module (122) is configured to determine the initial duration period in relation to a period of a clock cycle for controlling the driving circuit (110).

3. The device according to claim 2, wherein the controller (120) is configured to set the initial duration period to or an integer number of clock cycles based on the determined relation between the initial period and the period of the clock cycle.

4. The device according to any one of the preceding claims, wherein the controller (120) further comprises a digital modulator (124) for determining a steady-state portion of the modulation signal following the initial portion.

5. The device according to claim 4, wherein the digital modulator (124) is a delta-sigma modulator or a pulse width modulator.

6. The device according to claim 4 or 5 when dependent on claim 3, wherein the digital modulator (124) is configured to receive input of a fractional part from the pre-distortion module (122) corresponding to a remaining fraction of clock cycles in a relation between the initial period and the period of the clock cycle, wherein the digital modulator (124) uses the fractional part for determining the modulation signal.

7. The device according to any one of the preceding claims, wherein the pre-distortion module (122) is configured to determine the initial portion of the modulation signal based on a look-up table.

8. The device according to any one of the preceding claims, wherein the pre-distortion module (122) is configured to determine the initial portion of the modulation signal based on the non-linear function being formed by a first order model of thermal response of the TOPS (202; 302).

9. The device according to any one of the preceding claims, wherein the device (100) is configured to control a plurality of TOPSs (302), wherein the driving circuit (110) is configured to be cyclically sequentially connected to the TOPSs (302) of the plurality of TOPSs for providing power to the TOPSs (302), wherein the controller (120) is configured to generate the modulation signal for each of the TOPSs (302) in relation to a fraction of time during which the driving circuit (110) is connected to each of the TOPSs (302).

10. An optical switch (200), comprising:

a waveguide (204) being configured to propagate a light signal;
a thermo-optical phase shifter, TOPS, (202) associated with the waveguide (204) and configured to control a refractive index of the waveguide (204) for controlling a direction of light at an output of the waveguide (204); and
a device (100) according to any one of the preceding claims for controlling the temperature of the TOPS (202).

11. An optical device (300), comprising:

a plurality of waveguides (304), each waveguide (304) being configured to propagate a light signal;
a plurality of thermo-optical phase shifters, TOPSs, (302), wherein each TOPS (302) is associated with a respective waveguide (304) of the plurality of waveguides and wherein each TOPS (302) is configured to control a refractive index of the respective waveguide (304); and
one or more devices (100) according to any of claims 1-9 for controlling the temperature of the plurality of TOPSs (302).

12. The optical device according to claim 11, wherein the one or more devices (100) are configured to control the temperature of the TOPSs (302) within a range of temperatures corresponding to a range of phase shifts of the light signal extending over at least 500 degrees, such as over at least 720 degrees.

13. The optical device according to any one of claims 11-12, further comprising a plurality of light output elements (306), wherein each of the plurality of waveguides (304) is connected to a respective light output element (306) of the plurality of light output elements and wherein the optical device (300) is configured to control relative phase shifts of the light signals in the waveguides (304) for forming an optical phased array providing beam steering of an output light beam.

14. The optical device according to claim 13, wherein the optical device (300) is configured to scan a direction of the output light beams by changing the relative phase shifts of the light signals.

15. A method for controlling a thermo-optical phase shifter, TOPS, for affecting an optical waveguide based on temperature of the TOPS, said method comprising:

generating (402) a modulation signal for controlling a driving circuit providing power to the TOPS, wherein generating the modulation signal comprises determining an initial portion of the modulation signal for bringing a temperature of the TOPS from a first level corresponding to a first effective power of the driving circuit to a second level corresponding to a second effective power of the driving circuit, wherein, in case the second effective power is larger than the first effective power, the initial portion of the modulation signal is based on a non-linear function of the first effective power, the second effective power, and a maximum power of the driving circuit, and in case the second effective power is smaller than the first effective power, the initial portion of the modulation signal is based on a non-linear function of the first effective power, the second effective power, and the minimum power of the driving circuit;
providing (404) the modulation signal to the driving circuit; and
outputting (406) power from the driving circuit to the TOPS, wherein outputting of power comprises toggling between an on state of the driving circuit for outputting a maximum power and an off state of the driving circuit for outputting a minimum power, wherein the modulation signal controls the toggling scheme of the driving circuit for bringing the temperature of the TOPS to the second level and for maintaining the temperature of the TOPS at the second level based on the second effective power output by the driving circuit corresponding to the second level of temperature of the TOPS.

Fig. 1

Fig. 2

*Fig. 3*

$P_{max}/P_k = 5$, $Acc = 95\%$

Temperature [$T_\pi$]

time [sec]

$x10^{-4}$

— · — No initial portion

· · · · · Initial portion, linear function

——— Initial portion, non-linear function

Fig. 4a

$P_{max}/P_k = 1.5$, $Acc = 95\%$

Temperature [$T_\pi$]

time [sec]

$x10^{-4}$

— · — No initial portion

· · · · · Initial portion, linear function

——— Initial portion, non-linear function

Fig. 4b

Fig. 5

Fig. 6

Generating a modulation signal
for controlling a driving circuit
providing power to a
thermo-optical phase shifter,
wherein the generating
comprises determining an
initial portion based on a
non-linear function

402

Providing the modulation signal
to the driving circuit

404

Outputting power from the driving
circuit to the thermo-optical
phase shifter

406

Fig. 7

| | Europäisches Patentamt European Patent Office Office européen des brevets | **EUROPEAN SEARCH REPORT** | **Application Number** EP 24 21 2097 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Kim Taehwan: "UC Berkeley UC Berkeley Electronic Theses and Dissertations Title Realization of Integrated Coherent LiDAR", , 21 June 2019 (2019-06-21), XP055764846, Retrieved from the Internet: URL:https://escholarship.org/content/qt1d6 7v62p/qt1d67v62p.pdf?t=q0naiz [retrieved on 2021-01-13] * 4.1 * * 4.3.2 * * 4.3.3 * * 4.4 * * page 47 - page 53 * * page 56, line 10 - page 57, line 3 * * figures 4.7, 4.10 * * table 4.1 * ----- | 1-15 | INV. G02F1/01 G02F1/025 G02F1/21 G02F1/313 |
| X | VOLKAN GURSES ET AL: "Large-Scale Crosstalk-Corrected Thermo-Optic Phase Shifter Arrays in Silicon Photonics", ARXIV.ORG, CORNELL UNIVERSITY LIBRARY, 201 OLIN LIBRARY CORNELL UNIVERSITY ITHACA, NY 14853, 5 June 2022 (2022-06-05), XP091243141, Retrieved from the Internet: URL:https://ieeexplore.ieee.org/stamp/stam p.jsp?arnumber=9826900 [retrieved on 2025-04-01] * figure 1 * * Sec I * * Sec II.A * * Sec IV * * figures 1, 6, 7 * ----- -/-- | 1,3,6, 10,11,15 | TECHNICAL FIELDS SEARCHED (IPC) G02F |

The present search report has been drawn up for all claims

| Place of search | Date of completion of the search | Examiner |
|---|---|---|
| The Hague | 14 April 2025 | Votini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

<table>
<tr><td>Europäisches Patentamt<br>European Patent Office<br>Office européen des brevets</td><td align="center">**EUROPEAN SEARCH REPORT**</td><td>**Application Number**<br><br>**EP 24 21 2097**</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHUNG SUNGWON ET AL: "A Monolithically Integrated Large-Scale Optical Phased Array in Silicon-on-Insulator CMOS", IEEE JOURNAL OF SOLID-STATE CIRCUITS, IEEE, USA, 1 January 2018 (2018-01-01), pages 275-296, XP011674924, ISSN: 0018-9200, DOI: 10.1109/JSSC.2017.2757009 Retrieved from the Internet: URL:https://ieeexplore.ieee.org/document/8071147 [retrieved on 2017-12-27] * Section III.C * | 1,3,6, 10,11,15 | |
| A | US 2021/211202 A1 (TSAI KUEN-TING [TW] ET AL) 8 July 2021 (2021-07-08) * paragraph [0009] - paragraph [0010] * * paragraph [0012] * * paragraph [0072] - paragraph [0074] * | 1-15 | |
| | | | TECHNICAL FIELDS SEARCHED (IPC) |

The present search report has been drawn up for all claims

| Place of search | Date of completion of the search | Examiner |
|---|---|---|
| The Hague | 14 April 2025 | Votini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 2097

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2025

| Patent document cited in search report | Publication date | Patent family member(s) | | Publication date |
|---|---|---|---|---|
| US 2021211202 A1 | 08-07-2021 | CN | 107104736 A | 29-08-2017 |
| | | EP | 3417325 A1 | 26-12-2018 |
| | | JP | 6781264 B2 | 04-11-2020 |
| | | JP | 2019507381 A | 14-03-2019 |
| | | TW | 201743089 A | 16-12-2017 |
| | | US | 2021211202 A1 | 08-07-2021 |
| | | WO | 2017142608 A1 | 24-08-2017 |

EPO FORM P0459

For more details about this annex : see Official Journal of the European Patent Office, No. 12/82